# EUROPÄISCHE PATENTANMELDUNG

(11) **EP 3 981 554 A1**
(43) Veröffentlichungstag der Anmeldung: **13.04.2022**
(21) Anmeldenummer: 21188397.0
(22) Anmeldetag: 29.07.2021
(51) Int. Cl.: B25J 13/08, B25J 9/16, B25J 19/06

(54) **HANDHABUNGSVORRICHTUNG MIT ADAPTIVEM KOLLISIONSSCHUTZSYSTEM**

(30) Priorität: 08.10.2020 DE 102020212696
(71) Anmelder: Robert Bosch GmbH, 70442 Stuttgart (DE)
(72) Erfinder: Rueb, Andreas, 71732 Tamm (DE); Bock, Simon, 72770 Reutlingen (DE)

(57) **Zusammenfassung**

Handhabungsvorrichtung (1), insbesondere Roboter mit wenigstens einer in wenigstens einer Bewegungsrichtung (X) bewegbaren Handhabungseinrichtung (5) und mit einer Kollisionsschutzeinrichtung (10), welche dazu geeignet und bestimmt ist, die Kontaktkräfte bei Kollisionen der Handhabungseinrichtung (5) mit Objekten zu begrenzen, wobei die Kollisionsschutzeinrichtung (10) eine Kinematik aufweist, welche eine Relativbewegung der Handhabungseinrichtung (5) bezüglich eines Trägers der Handhabungseinrichtung mechanisch ermöglicht, wobei diese von wenigstens einer Aktoreinrichtung gesperrt werden kann und die Relativbewegung im Fall einer Kollision ermöglicht
dadurch gekennzeichnet, dass
die Handhabungsvorrichtung (1) eine Erfassungseinrichtung (4) aufweist, welche die auf die Handhabungseinrichtung und/oder die durch die Aktoreinrichtung entkoppelten Bestandteile der Kollisionsschutzeinrichtung wirkenden Kräfte ermittelt und die Kollisionsschutzeinrichtung (10) eine relative Bewegung der Handhabungseinrichtung zum Träger der Handhabungseinrichtung unter Berücksichtigung dieser Kräfte ohne Kollision durch die Aktoreinrichtung verhindert und bei einer Kollision auslöst oder ermöglicht.

## Beschreibung

Die vorliegende Erfindung bezieht sich auf eine Handhabungsvorrichtung wie beispielsweise einen Roboter. Derartige Handhabungsvorrichtungen werden im Stand der Technik bereits seit längerem eingesetzt, um Arbeitsvorgänge durchzuführen. Dabei können derartige Handhabungsvorrichtungen beispielsweise Handhabungseinrichtungen wie etwa Greifeinrichtungen aufweisen, welche zum Greifen und/oder Transportieren von Objekten dienen oder auch Dreheinrichtungen, welche etwa zum Schrauben dienen. Es ist bekannt, dass derartige Handhabungsvorrichtungen Kollisionsschutzsysteme aufweisen können.

Kollisionsschutzsysteme dienen beispielsweise in der Robotik zum Schutz des Roboters, sowie seiner Endeffektoren und dem Umfeld, etwa in der Roboterzelle. Bei einem Kontakt zwischen der am Roboterflansch angebrachten Endeffektoren inklusive der gehandhabten Werkstücke und einem anderen Gegenstand, der eine bestimmte Kraftschwelle übersteigt, ermöglicht der Kollisionsschutz üblicherweise das Rückweichen der Peripherie und/oder löst einen Nothalt des Roboters aus.

Am Markt verfügbare Systeme gibt es von unterschiedlichen Herstellern. Diese werden beispielsweise als Kollisionsschutz, Überlastschutz, Kollisionssensor, Überlastsensor, anticollision Sensor und overload protection sensor bezeichnet.

Typischerweise nutzen diese Systeme eine mit einem zentralen Pneumatikaktor beaufschlagte Mechanik. Deren Rückweichen wird so bis zu einer bestimmten Kraftschwelle verhindert. Die Kraftschwelle lässt sich vor dem Betrieb über den Druck des Pneumatikaktors einstellen.

Aus der DE 20 2014 007 052 U1 ist ein Kollisionsschutzsystem mit pneumatischem Aktor, dessen Druck so angepasst wird, dass eine bestimmte Kraftschwelle eingehalten wird, bekannt.

Die DE 20 2014 007 052 U1 zeigt damit eine adaptive Regelung der Kraftschwelle auf, limitiert sich aber auf pneumatische Aktoren für ein adaptives System, welche in der Automatisierung mehr und mehr reduziert werden und schwer hochdynamisch zu regeln sind.

Außerdem werden die Freiheitsgrade in x-, y- und z vorgegeben und eine Überwachung des Systems über den Auslöseweg. Darüber hinaus zeigt es keine Berücksichtigung der Gewichtskraft und Trägheitskraft der Endeffektoren durch ein auf Bewegungs-, Positions- und Orientierungsdaten basierendes Modell auf, so dass unklar bleibt auf welche Größe hin geregelt wird.

Eine weitere Aufgabe der vorliegenden Erfindung liegt darin, eine höhere Variabilität hinsichtlich der Antriebs- und/oder Aktorkonzepte zu erreichen.

Die DE 20 2013 105 504 U1 beschreibt ein Kollisionsschutzsystem, das gemeinsam mit den Kraftsensoren in einem Roboter arbeitet und durch Nachgiebigkeit die zu verzögernde Masse beim Kontakt mit einem Werker vermindert.

Während Kollisionsschutzsysteme grundsätzlich wie in der DE 20 2013 105 504 U1 gezeigt die zu verzögernde Masse und damit die Kollisionskraft des Robotersystems reduzieren können, werden die aktuell am Markt befindlichen Kollisionsschutzsysteme vor der Applikation auf eine gewisse Aktorkraft eingestellt. Dies hat zur Folge, dass das System nicht so eingestellt werden kann, dass trotz der Gewichts- und Trägheitskraft beim Verfahren ein Auslösen ausbleibt und zeitgleich eine geringe Kraftschwelle im Falle einer Kollision besteht. Der Erfindung liegt daher als weitere Aufgabe zugrunde, einen wirksamen Kollisionsschutz auch bei schnellen Bewegungen und/oder starken Beschleunigungen zu erreichen

Darüber hinaus besitzen die Mechaniken/Kinematiken der am Markt befindlichen Kollisionsschutzsysteme für Kollisionen aus verschiedenen Richtungen eine äußerst inhomogene Kraftschwelle, wodurch eine Regelung auf einen genauen Wert der Kraftschwelle auch rein mechanisch nicht möglich ist. Die vorliegende Erfindung formuliert mechanische Gestaltungsprinzipien, um diesen Umstand zu lösen.

Die DE 10 2009 047 033 A1 offenbart ein System zur Kollisionsdetektion eines Industrieroboters über den Abgleich zwischen einem aus Steuerungsdaten gespeisten Modell und einer Kraft-Momentensensorik im Maschinengestell.

Die DE 10 2009 047 033 A1 beschreibt daher ein Prinzip zum Abgleich zwischen einem kinematischen Modell, welches mit Bewegungs- und Positionsdaten arbeitet, und einem tatsächlich auftretenden Wert. Für die Applikation an den Endeffektoren des Roboters ist ein Sensor im Maschinenbett aufgrund der schwingungsfähigen, langen seriellen Kinematik des Roboters ungünstig. Zudem würde die Steuerung Zeit benötigen, um die Kollision zu erkennen.

Während dieser Zeit und des gesamten Bremsvorganges des Roboters treten entsprechend hohe Kollisionskräfte auf. Eine weitere der Erfindung zugrundeliegenden Aufgabe ist daher die Vermeidung hoher Kollisionskräfte in dieser genannten Situation.

Aus der DE 10 2010 063 202 A1 ist ein Konzept mit Druckstücken zur Arretierung bekannt. Dieses System ist so ausgelegt, dass es bei eingeschränkten Beschleunigungen mit statischer Haltekraft die biomechanischen Grenzwerte nach ISO 15066 einhält.

Die DE 10 2010 063 202 A1 beinhaltet einen Kollisionsschutz, der bereits in einem bestimmten Anwendungsbereich die Normwerte nach ISO 15066 für den Kontakt mit einem Werker einhält. Durch die statische Einstellung der Kraftschwelle über die Federsteifigkeit der Druckstücke kann dieses System, um die Werte einzuhalten, jedoch nur in einem sehr begrenzten Beschleunigungsbereich arbeiten, da es sonst zu Fehlauslösungen kommt.

Handhabungsvorrichtungen, insbesondere Industrieroboter können bei falscher Steuerung oder Fehlfunktion erhebliche Schäden an sich, ihren Endeffektoren, beispielsweise Werkzeugen und ihrem Umfeld (im kollaborativen Betrieb insbesondere auch Werkern) verursachen. Für den Schutz der Handhabungsvorrichtung gibt es bereits viele Ansätze, wie die Sensorhaut des APAS. Die Endeffektoren an der Handhabungseinrichtung beispielsweise einem Roboterflansch werden damit jedoch nicht erfasst, obwohl sie aufgrund der schwer zu beeinflussenden Geometrie und der hohen Geschwindigkeit das höchste Beschädigungs-/Verletzungspotential aufweisen.

Der Erfindung liegt unter anderem als Aufgabe die Lösung dieser Problematik zugrunde.

Die Erfindung löst diese Problematik durch dynamisch geregelte Aktoren und eine Mechanik mit homogener Auslöseschwelle.

Daher beschreibt die vorliegende Erfindung eine Handhabungsvorrichtung, insbesondere einen Roboter mit wenigstens einer in wenigstens einer Bewegungsrichtung bewegbaren Handhabungseinrichtung und mit einer Kollisionsschutzseinrichtung, welche dazu geeignet und bestimmt ist, die Kontaktkräfte bei Kollisionen der Handhabungseinrichtung mit Objekten zu verhindern und/oder zu begrenzen, wobei die Kollisionsschutzseinrichtung eine Kinematik aufweist, welche eine Relativbewegung der Handhabungseinrichtung zum Träger der Handhabungseinrichtung mechanisch ermöglicht, wobei diese von wenigstens einer Aktoreinrichtung gesperrt werden kann und die Relativbewegung im Fall einer Kollision ermöglicht.

Dabei kann eine Aktoreinrichtung vorgesehen sein , welche dazu geeignet und bestimmt ist, im Fall einer Kollision eine Bewegung der Handhabungseinrichtung auszulösen oder zu ermöglichen.

Erfindungsgemäß weist die Handhabungsvorrichtung eine Erfassungseinrichtung auf, welche auf die Aktoreinrichtung und/oder die Handhabungseinrichtung und die durch die Aktoreinrichtung entkoppelten Bestandteile der Kollisionsschutzeinrichtung - insbesondere infolge ihrer Bewegung und/oder der Orientierung - wirkenden Kräfte ermittelt und die Kollisionsschutzeinrichtung eine relative Bewegung der Handhabungseinrichtung zum Träger der Handhabungseinrichtung unter Berücksichtigung dieser Kräfte ohne Kollision durch die Aktoreinrichtung verhindert und bei einer Kollision auslöst und/oder ermöglicht.

So kann bevorzugt die Kollisionsschutzeinrichtung die in Folge der Bewegung der Aktoreinrichtung und/oder der Handhabungseinrichtung wirkenden Kräfte ermitteln und die Kollisionsschutzeinrichtung ist bevorzugt dazu geeignet und bestimmt, eine Bewegung der Handhabungseinrichtung unter Berücksichtigung dieser Kräfte auszulösen oder zu ermöglichen.

Unter einer Handhabungsvorrichtung wird im Rahmen der vorliegenden Erfindung eine Einrichtung verstanden, die einen oder mehrere Endeffektoren (Greifer, Schrauber, Schweißzange, ...) besitzt und diese/n in mindestens einer Richtung bewegen kann. Die Handhabungsvorrichtung kann dabei auch eine Steuerungs-/Berechnungseinrichtung, die Signale erfassen und verarbeiten kann, umfassen. Außerdem kann sie ein Kollisionsschutzsystem aufweisen.

So kann es sich bei der Handhabungsvorrichtung etwa um einen Industrieroboter handeln. Ein Industrieroboter ist eine spezifische Handhabungsvorrichtung. Daneben kann die Erfindung jedoch auch außerhalb der Industrierobotik eingesetzt werden, z. B. in Gebieten wie der Pflege, dem Service oder bei Automaten. Allgemein ist die Erfindung in solchen Anwendungsfeldern interessant, in denen eine mechanische Auslösung durch einen Menschen möglich sein muss trotz eigentlich deutlich höherer Betriebskräfte.

Unter Handhabungseinrichtungen werden alle Endeffektoren (wie etwa Werkzeuge) und Werkstücke bezeichnet, die durch eine Handhabungsvorrichtung getragen und/oder verfahren und/oder bewegt werden können und welche insbesondere der Erfüllung einer Arbeitsaufgabe dienen oder Bestandteil dieser sind.

Das hier beschriebene Kollisionsschutzsystem ist in Verbindung mit verschiedensten Endeffektoren denkbar wie beispielsweise Greifern, Schraubern und dergleichen. Die Handhabungsvorrichtung weist daher bevorzugt eine Handhabungseinrichtung auf und ist daher gewissermaßen ein übergeordneter Begriff.

Unter einer Erfassungseinrichtung wird eine Einrichtung verstanden, welche der Erfassung der aufgrund eines Verfahrens oder allgemein der auftretenden oder wirkenden Kräfte dient. Diese kann dabei eine oder mehrere Sensoreinrichtungen aufweisen oder aber Werte aus einer Steuerung übernehmen.

Bei den wirkenden Kräften handelt es sich insbesondere um Beschleunigungskräfte und/oder aus einer Pose der Handhabungsvorrichtung resultierende Gravitationskräfte. Eine Pose beschreibt dabei eine Kombination aus einer Position und einer Orientierung insbesondere im dreidimensionalen Raum

Relevant sind insbesondere die auf die Handhabungseinrichtung (Peripherie) wirkenden statischen und dynamischen Kräfte, weil diese kompensiert werden müssen. Die Aktoreinrichtung wird bevorzugt im feststehenden Teil der Kollisionsschutzeinrichtung angeordnet, so dass deren Dynamik und Massenträgheit keinen Beitrag zu diesen Kräften leistet. Bevorzugt ist die Aktoreinrichtung dazu bestimmt, im Fall einer Kollision eine Bewegung der Handhabungseinrichtung und insbesondere eine Ausweich- oder Rückwärtsbewegung (oder eine Bewegung die wenigstens eine Komponente entgegengesetzt der Bewegungsrichtung aufweist) oder eine Verzögerung der Handhabungseinrichtung auszulösen und/oder zu ermöglichen. Dabei ist es möglich, dass durch die Kollision selbst diese Bewegung ausgelöst wird.

Es ist daher möglich, dass die Kollisionsschutzeinrichtung im Falle einer Kollision die auftretende Kollisionskraft begrenzt und/oder bei Auftreten einer Kollision eine Ausweich- oder Rückwärtsbewegung zulässt, um Schaden zu verhindern oder zu verringern.

Unter einer Kollisionsschutzeinrichtung wird daher im Zusammenhang mit der vorliegenden Erfindung auch eine Einrichtung verstanden, die dazu ausgelegt ist, bei auftretenden Kollisionen Schäden an der Handhabungseinrichtung oder anderen Objekten und/oder Personen abzuwenden.

Im Gegensatz zu aus dem Stand der Technik bekannten Kollisionsschutzsystemen wird daher vorgeschlagen, dass zur Ermittlung der vorliegenden Handhabungskräfte auch die Bewegungsdaten der Handhabungseinrichtung, wie etwa einer Greifeinrichtung, verwendet werden. In Reaktion auf diese Daten können beispielsweise die Aktorkräfte und damit die Kraftschwelle eingestellt werden, ab denen die Mechanik ein Zurückweichen ermöglicht.

Unter einer Aktorkraft wird dabei die durch einen Aktor erzeugte Kraft verstanden. Diese wird bevorzugt gesteuert und/oder geregelt.

Bei einer bevorzugten Ausführungsform ist die Handhabungseinrichtung in mehreren Richtungen bewegbar, insbesondere bewegbar gegenüber der ruhenden Umgebung. So ist es beispielsweise denkbar, dass die Handhabungseinrichtung in mehreren linearen Richtungen bewegbar ist, beispielsweise in zueinander senkrechten Richtungen. Daneben kann die Handhabungseinrichtung auch um eine oder auch um zwei oder mehrere rotative Achsen drehbar sein.

Damit löst die vorliegende Erfindung durch eine Anpassung der Auslöseschwelle die oben beschriebenen Probleme, die darin begründet sind, dass ein Kollisionsschutzsystem auch im Stand der Technik nur bis zu gewissen Beschleunigungen einsetzbar ist.

Auf diese Weise wird ein derartiges Kollisionsschutzsystem effektiver als nicht adaptive Systeme. Damit ist erfindungsgemäß das Kollisionsschutzsystem adaptiv und insbesondere auch auf die Bewegungen der Handhabungseinrichtungen angepasst.

Unten beschrieben sind mehrere denkbare Umsetzungen, die eine sinnvolle Regelungsstrategie für die Aktoren des Systems beschreiben.

Weiterhin wird wie unten beschrieben auch kein permanentes Berechnen einer Auslöseschwelle (d. h. einer Kraft zur Überwindung des Aktors) nötig, sondern diese Schwelle wird bevorzugt vorgegeben
Dabei ist es bevorzugt, dass Aktorwerte permanent angepasst werden, abhängig u.a. von den ermittelten Daten. Die Auslöseschwelle ist bevorzugt auch ein Teil dieser Daten und kann als fixer zusätzlicher Offset betrachtet werden, der sich u.a. aus den zulässigen Kontaktkräften ergibt. Diese werden bevorzugt je nach Applikation konfiguriert.

Bevorzugt weist die Handhabungsvorrichtung eine Steuerungseinrichtung auf, welche eine von der Aktoreinrichtung auszuübende Gegenkraft einstellt, welche im Kollisionsfall überwunden wird, um eine Ausweichbewegung und/oder Rückwärtsbewegung der Handhabungseinrichtung oder anderer Elemente der Handhabungsvorrichtung zu ermöglichen.

Unter einer Gegenkraft wird die Kraft verstanden, die notwendig ist, um einer weiteren Kraft, wie etwa einer Gewichts- oder Trägheitskraft entgegen zu wirken. Diese Gegenkraft kann (bevorzugt laufend) berechnet werden. Die Summe kann mit einem Offset/ oder ein Produkt mit einem Offset-Faktor eingestellt werden (beispielsweise durch die über die Mechanik umgewandelte Aktorkraft)

Bevorzugt wird die Gegenkraft nicht alleinig von dem Kollisionsobjekt überwunden. Es ist beispielsweise möglich, dass die Gegenkraft durch Überlagerung mit dynamischen/statischen Kräften welche auf die Handhabungseinrichtung in diesem Moment wirken, überwunden wird.

Damit wird auch vorgeschlagen, dass die Auslöseschwelle der Kollisionsschutzeinrichtung adaptiv geregelt wird, um die aus Position und Bewegung des Roboters resultierenden Trägheits- und Gewichtskräfte der Endeffektoren zu kompensieren. Auf der Grundlage von Bewegungs- und wahlweise auch Positions- und/oder Orientierungsdaten können, bevorzugt gemeinsam mit der Masse und/oder dem Schwerpunkt der Endeffektoren diese Kräfte berechnet werden.

Dabei können diese Werte sowohl auf Grundlage von Bewegungs- oder auch Positionsdaten ermittelt werden, die aus einer Steuerung stammen können, insbesondere einer Robotersteuerung, oder aber diese Werte können von einem Sensorsystem stammen. Daneben wäre es auch möglich, Daten sowohl von einem Sensorsystem zu beziehen als auch aus einer Steuerung. So können beispielsweise Geschwindigkeits- und Beschleunigungsdaten aus einem Steuerungssystem bezogen, andere Daten wiederum mit Sensoren gemessen werden.

Bevorzugt weist die erfindungsgemäße Handhabungsvorrichtung auch Aktoreinrichtungen auf, die das Rückweichen und/oder Ausweichen des Kollisionsschutzes in verschiedenen Freiheitsgraden verhindern. Diese können beispielsweise auf Grundlage eines kinematischen Modells so eingestellt werden, dass sie das Auslösen des Kollisionsschutzes bei Einhaltung der errechneten Kraftwerte verhindern.

Tritt jedoch eine Kraft auf, die größer ist als ein gewisser Schwellwert (bzw. eine gewisse Auslöseschwelle) (im kollaborierenden Betrieb der biomechanische Grenzwert nach ISO 15066) löst das System aus und ermöglicht ein Rückweichen der Endeffektoren, etwa eines Greifarms und/oder Greifers, vorzugsweise bis alle angetriebenen Achsen der Handhabungsvorrichtung zum Stillstand kommen. Auch wäre es möglich, eine Restenergie abzubauen.

Auf diese Weise reduziert sich bevorzugt die bei einer Kollision zu verzögernde Masse auf die Endeffektoren selbst und damit werden die auftretenden Kontaktkräfte minimiert. Gleichzeitig findet während des normalen Verfahrens der Handhabungsvorrichtung bzw. des normalen Arbeitsbetriebs keine Fehlauslösung aufgrund der Beschleunigung und der Gewichtskraft der Endeffektoren statt.

Dies bedeutet, dass im Gegensatz zum Einsatz herkömmlicher Systeme deutlich höhere Beschleunigungen und damit deutlich geringere Zykluszeiten erreichbar sind.

Zudem werden beispielsweise ein Roboterarm, und ein Umfeld des Roboters bei einer Kollision deutlich geringeren Kräften ausgesetzt. Insbesondere im kollaborativen Betrieb ermöglicht dies die Einhaltung der normseitig vorgegebenen Werte auch für Endeffektoren und schließt somit eine wichtige Lücke in den am Markt existierenden Systemen.

Im Vergleich zu Systemen, die an der Kraft- und/oder Momentensensorik der Robotereinrichtung 1 ansetzen, liegt ein weiterer Vorteil neben der Reduktion der zu verzögernden Massen in der Reaktionszeit des Systems.

Die Reaktionszeit des Systems wird insbesondere auch dadurch verringert, dass die wenigstens eine Aktoreinrichtung bereits adaptiv auf eine Auslöseschwelle bzw. einen Kraftschwellwert eingestellt wird. Das Rückweichen ergibt sich im Kollisionsfall dadurch, dass diese Auslöseschwelle bzw. dieser Kraftschwellwert unmittelbar mechanisch überwunden wird und daher im Kollisionsfall keine weiteren Berechnungen nötig sind.

Ist eine Auslöseschwelle überschritten, kommt es zu einer mechanischen Auslösung. Es bedarf keiner vorherigen Erfassung der Kollision durch das Steuerungssystem oder eine andere Rechnereinheit. Damit müssen im Gegensatz zu Systemen aus dem Stand der Technik die Kräfte nicht erst gemessen werden, sondern die Aktoreinrichtung ist bereits auf die richtige Auslöseschwelle eingestellt.

Bei einer weiteren vorteilhaften Ausführungsform weist die Handhabungsvorrichtung eine Berechnungseinrichtung auf, welche eine Gegenkraft ermittelt, die ein Zurückweichen der Handhabungseinrichtung trotz der infolge der Bewegung und/oder der Orientierung auftretenden Kräfte verhindert.

Dabei ist es möglich, dass die Gegenkraft wie oben erwähnt auf Basis von kinematischen Daten ermittelt wird, beispielsweise auf der Grundlage von Bewegungs- oder wahlweise auch Positions- oder Orientierungsdaten. Daneben kann wie oben erwähnt die Gegenkraft auch mit Hilfe eines Sensorsystems erfasst bzw. ermittelt werden.

Bei einer weiteren vorteilhaften Ausführungsform weist die Handhabungsvorrichtung eine Steuerungseinrichtung auf, welche die Aktoreinrichtung unter Berücksichtigung der von der Erfassungseinrichtung ermittelten Kräfte steuert. Dabei kann die Aktoreinrichtung insbesondere unter Berücksichtigung dieser Kräfte geregelt werden.

Die Aktoreinrichtung ist damit einstellbar und adaptiv, insbesondere auch unter Berücksichtigung der Bewegung der Handhabungseinrichtung und/oder der Endeffektoren einstellbar. Bevorzugt wird die Aktoreinrichtung unter Berücksichtigung der Kräfte angesteuert. So kann beispielsweise bei einem pneumatischen Aktor ein entsprechender Druck gesenkt oder erhöht werden. Falls die Aktoreinrichtung ein magnetisches System ist, können etwa Gegenkräfte eines Elektromagneten variiert werden.

Wenn nun eine Kollision auftritt, sind die dadurch ausgeübten Gegenkräfte als diejenigen anzusehen, auf welche die Aktoreinrichtung eingestellt ist. Auf diese Weise gibt die Kollisionsschutzeinrichtung ohne weitere Berechnung nach, da eben eine mechanische Auslöseschwelle überwunden wurde.

Bei einer weiteren bevorzugten Ausführungsform weist die Handhabungsvorrichtung wenigstens eine Aktoreinrichtung auf, die ein Eingreifen der Kollisionsschutzeinrichtung und/oder ein Zurückweichen eines Kollisionsschutzes unter vorgegebenen Umständen verhindert.

Bei einer weiteren bevorzugten Ausführungsform ist die Aktoreinrichtung aus einer Gruppe von Aktoreinrichtungen ausgewählt, welche pneumatische Aktoreinrichtungen, hydraulische Aktoreinrichtungen, magnetische Aktoreinrichtungen, elektromotorische Aktoreinrichtungen und dergleichen umfasst.

Bevorzugt wird damit die Aktoreinrichtung so eingestellt, dass bis zu einer bestimmten Auslöseschwelle kein Zurückweichen auftritt, danach jedoch ein Zurückweichen (insbesondere der Handhabungseinrichtung) und/oder der Endeffektoren initiiert und/oder ermöglicht wird. Das Zurückweichen einer Mechanik wird daher bevorzugt von wenigstens einer Aktoreinrichtung und bevorzugt von mehreren Aktoreinrichtungen bis zu einer bestimmten Auslöseschwelle verhindert. Diese Auslöseschwelle wird ständig so geregelt, dass ein Rückweichen nur aufgrund der Trägheit oder Erdanziehungskraft wie im Modell berechnet nicht stattfindet.

Daneben kann ein Offset vorgesehen sein, um Regelabweichungen und Latenzen auszugleichen. So ist es beispielsweise möglich, dass für die ermittelte Auslöseschwelle ein vorgegebener Offset hinzugefügt wird.

Weiterhin ist es auch möglich, dass nur eine Aktoreinrichtung vorgesehen ist, die mehrere oder sämtliche Freiheitsgrade blockiert.

Bei einer weiteren bevorzugten Ausführungsform ist eine Vielzahl von Aktoreinrichtungen vorgesehen, die ein Zurückweichen des Kollisionsschutzes unter vorgegebenen Umständen verhindert. So können beispielsweise für eine Bewegungsrichtung zwei Aktoreinrichtungen (für eine Vorwärts- und eine Rückwärtsbewegung) eingesetzt werden.

Bevorzugt ist eine Mechanik der Erfindung zur Lösung des Problems so ausgebildet, dass eine Aktoreinrichtung das Rückweichen in einer Achs-Richtung blockiert und mit keiner oder einer nur stark reduzierten (weiteren) Kraft gleichzeitig die entgegengesetzte Richtung blockiert. Dies kann dabei derart erfolgen, dass pro Achse (Translations- und/oder Rotationsachse) zwei oder mehr Aktoren so eingesetzt werden, dass jeder von ihnen die Achse nur in positiver oder negativer Richtung blockiert. Daneben ist es auch möglich, dass ein oder mehr Aktoren so ausgestaltet sind, dass die von ihnen ausgeübte Blockierung zwischen positiver und negativer Achsrichtung umgeschaltet werden kann.

Weiterhin ist es möglich, zwei oder mehr Aktoren so zu platzieren, dass sie bei einer Mechanik mit mehr als einem Drehpunkt unterschiedliche Hebel zu diesen besitzen. Daneben ist es auch möglich, dass ein oder mehrere Aktoreinrichtungen so in ihrer Position angepasst werden, dass sich der Hebel entsprechend verändert.

Bei einer weiteren bevorzugten Ausführungsform ist jedem Freiheitsgrad der Bewegung der Handhabungseinrichtung wenigstens eine Aktoreinrichtung zugeordnet. So kann beispielsweise jede Achse eigene Aktoreinrichtungen aufweisen, um eine Rückweichung zu blockieren (oder ggfs. insbesondere bei einer Kollision zu erlauben).

Daneben ist es auch möglich, dass eine Mechanik so ausgestaltet ist, dass zwei oder mehr Kräfte, die auf jeweils eine Achse wirken, unabhängig ihrer Richtung auf dieselbe Weise gegen eine gemeinsame Aktoreinrichtung oder mehrere gemeinsame Aktoreinrichtungen arbeiten.

Bei einer weiteren vorteilhaften Ausführungsform weist die Handhabungsvorrichtung eine Erfassungseinrichtung zum Erfassen von kinematischen Messwerten der Handhabungseinrichtung auf. Dabei kann es sich wie oben erwähnt um Sensoreinrichtungen handeln, die beispielsweise Kraft- oder auch Bewegungswerte erfassen. Dabei ist es möglich, dass derartige Sensoreinrichtungen auch redundant zur Verfügung stehen.

Daneben kann die Erfassungseinrichtung die entsprechenden Messwerte auch beispielsweise aus einer Steuerungseinrichtung ermitteln.

Bei einer weiteren bevorzugten Ausführungsform ist wenigstens eine Sensoreinrichtung zum Erfassen einer Beschleunigung, Position und/oder Orientierung der Handhabungseinrichtung geeignet und bestimmt. Dabei kann auch der Schwerpunkt sowie das Gewicht der Handhabungseinrichtung und gegebenenfalls eines von der Handhabungseinrichtung gehaltenen Objekts, etwa eines zu transportierenden Werkstücks mitberücksichtigt werden.

Bei einer weiteren vorteilhaften Ausführungsform sind wenigstens Bestandteile der Kollisionsschutzeinrichtung zwischen der Handhabungseinrichtung und einem Träger der Handhabungseinrichtung angeordnet. Bei dem Träger kann es sich beispielsweise um einen Roboterflansch handeln und bei der Handhabungseinrichtung oder einem Endeffektor etwa um eine Greifeinrichtung, die an diesem Roboterflansch angeordnet ist. Bevorzugt ist dabei zwischen diesem Roboterflansch oder allgemein dem Träger und der Greifeinrichtung zumindest eine Aktoreinrichtung angeordnet.

Bevorzugt ist die Handhabungseinrichtung gegenüber dem Träger bewegbar und insbesondere in wenigstens einer und bevorzugt in mehreren Bewegungsrichtungen bewegbar. Dabei kann die Handhabungseinrichtung gegenüber dem Träger beispielsweise drehbar sein oder auch in wenigstens einer oder auch mehreren Richtungen schwenkbar oder verschiebbar.

Bei einer weiteren bevorzugten Ausführungsform weist die Kollisionsschutzeinrichtung eine serielle, eine parallele oder eine aus diesen Typen gemischte Kinematik auf. So können unterschiedliche Bewegungsrichtungen durch seriell und/oder parallel geschaltete Mechaniken ermöglicht sein.

Bei einer weiteren bevorzugten Ausführungsform stellt die Kollisionsschutzeinrichtung einen Mindesthebel zwischen dem Drehpunkt der Kinematik und einem Kollisionskraftangriffspunkt sicher, wobei dies insbesondere durch Verwendung eines durch Sensorik vor Kontakt geschützten Gehäuses erfolgt. Damit weist bevorzugt die Handhabungsvorrichtung ein Gehäuse auf, an dem wenigstens eine und bevorzugt eine Vielzahl von Sensoreinrichtungen angeordnet ist.

Bei einer weiteren vorteilhaften Ausführungsform behindern aus der Bewegung und/oder der Orientierung der Handhabungseinrichtung resultierende Kräfte die Kinematik der Kollisionsschutzeinrichtung nicht an der Auslösung oder Ermöglichung einer Bewegung der Handhabungseinrichtung. Bevorzugt findet also eine Berücksichtigung derartiger Kräfte bei der Ermittlung etwa der Auslöseschwelle statt. Dabei können diese Kräfte anhand eines Modells berücksichtigt werden oder berechnet werden.

Bei einer weiteren bevorzugten Ausführungsform ist die Mechanik der Kollisionsschutzeinrichtung mindestens teilweise seriell ausgeführt ist und weist bevorzugt eine Überwachungseinrichtung für die Auslösung mindestens einer Achse auf. Dies kann bei Auslösung die Aktoren anderer Achsen, zumindest der der Kollision weiter entgegenwirkenden, abschalten und so auch ein Rückweichen in diesen Achsen auch unterhalb der Auslöseschwelle ermöglichen.

Die vorliegende Erfindung ist weiterhin auf ein Verfahren zum Betreiben einer Handhabungsvorrichtung und insbesondere eines Roboters mit wenigstens einer in wenigstens einer Bewegungsrichtung bewegbaren Handhabungseinrichtung gerichtet. Dabei ist eine Kollisionsschutzeinrichtung vorgesehen, welche die Kontaktkräfte bei Kollisionen der Handhabungseinrichtung mit Objekten begrenzt, wobei die Kollisionsschutzeinrichtung eine Kinematik aufweist, welche eine Relativbewegung der Handhabungseinrichtung relativ zu einem Träger der Handhabungseinrichtung ermöglicht, wobei diese von wenigstens einer Aktoreinrichtung gesperrt werden kann und die Relativbewegung im Falle einer Kollision ausgelöst oder ermöglicht wird.

Bevorzugt werden übermäßige Kontaktkräfte bei Kollisionen der Handhabungseinrichtung mit Objekten verhindert, wobei die Kollisionsschutzeinrichtung wenigstens eine Aktoreinrichtung aufweist, welche im Falle einer Kollision eine Bewegung der Handhabungseinrichtung auslöst oder ermöglicht.

Erfindungsgemäß weist die Handhabungsvorrichtung eine Erfassungseinrichtung auf, welche die auf die Handhabungseinrichtung und/oder die durch die Aktoreinrichtung entkoppelten Bestandteile der Kollisionsschutzeinrichtung insbesondere infolge ihrer Bewegung und/oder der Orientierung wirkenden - Kräfte ermittelt und die Kollisionsschutzeinrichtung eine relative Bewegung der Handhabungseinrichtung zum Träger der Handhabungseinrichtung unter Berücksichtigung dieser Kräfte ohne Kollision durch die Aktoreinrichtung verhindert und bei einer Kollision auslöst oder ermöglicht.

Bevorzugt erfasst eine Erfassungseinrichtung der Handhabungsvorrichtung, die auf die Aktoreinrichtung in Folge der Bewegung der Handhabungseinrichtung wirkenden Kräfte und die Kollisionsschutzeinrichtung löst eine Bewegung der Handhabungseinrichtung unter Berücksichtigung dieser Kräfte aus oder ermöglicht diese.

Dabei können die Kräfte beispielsweise Gewichtskräfte oder auch Trägheitskräfte sein, welche auf die Handhabungseinrichtung wirken. Daneben kann es sich bei den Kräften auch um Prozesskräfte handeln, d. h. durch den durchzuführenden Arbeitsprozess verursachte.

Besonders bevorzugt werden dabei die von der Aktoreinrichtung ausgeübten Kräfte, welche insbesondere im Falle einer Kollision meist zu überwinden sind, adaptiv angepasst und insbesondere auch adaptiv unter Berücksichtigung der Bewegung der Handhabungseinrichtung angepasst.

Dabei werden Auslöseschwellen ermittelt, welche im Falle einer Kollision zu einem Zurückweichen der Handhabungseinrichtung führen.

Bevorzugt wird adaptiv eine durch die Aktoreinrichtung ausgeübte Gegenkraft eingestellt, die im Falle einer Kollision zu einem mechanischen Zurückweichen der Handhabungseinrichtung führt.

Weitere Vorteile und Ausführungsformen ergeben sich aus den beigefügten Zeichnungen.

Darin zeigen:
Fig. 1 eine schematische Darstellung zur Veranschaulichung der auftretenden Kräfte;
Fig. 2 eine Darstellung zur Beschreibung des erfindungsgemäßen Verfahrens;
Fig. 3 eine Darstellung der erfindungsgemäßen Struktur;
Fig. 4 eine Darstellung zur Veranschaulichung der Probleme bisheriger Mechaniken;
Fig. 5 eine Darstellung zur Veranschaulichung getrennter Achsen;
Fig. 6 eine Darstellung zur Veranschaulichung getrennter Achsen bei einer Hebelmechanik;
Fig. 7 eine Darstellung zur Veranschaulichung getrennter Achsen bei einer Positionsänderung;
Fig. 8 eine Darstellung zum Kräfteverhältnis sich addierender Beschleunigungs- und Kollisionskräften gegenüber einer Aktorkraft;
Fig. 9a-c eine Ausgestaltung einer seriellen Kinematik;
Fig. 10a-c eine Ausgestaltung einer parallelen Kinematik;
Fig. 11a-b eine Darstellung einer gemischten Kinematik;
Fig. 12 eine Darstellung der gemischten Kinematik von oben;

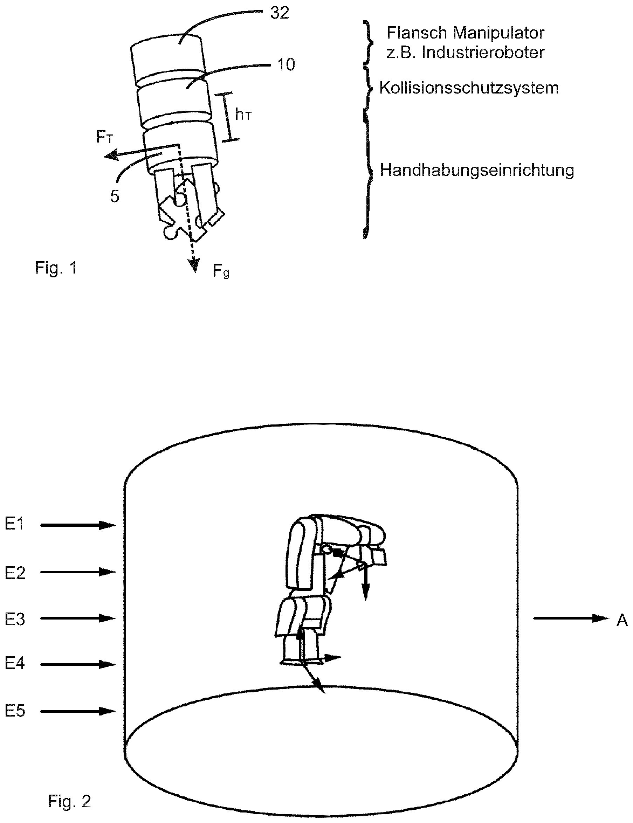

Figur 1 veranschaulicht die bei der Bewegung von Handhabungseinrichtungen 5 auftretenden Kräfte. Dabei tritt einerseits eine Trägheitskraft F_{T} auf, welche der Beschleunigung des Schwerpunkts bzw. der entsprechenden Kraft Fₐ entgegengesetzt ist. Dabei ist bei der Bewertung der Trägheitskraft auch die Höhe h_{T} zu berücksichtigen welche die Länge eines Hebelarmes kennzeichnet, der dem Abstand von Massenschwerpunkt und Lagerstelle der Endeffektoren im Kollisionsschutz entspricht. Daneben tritt auch noch die Gewichtskraft F_{g} durch die Handhabungseinrichtung und/oder ein durch diese gehaltenes Werkstück auf.

Auf Basis dieser Kräfte kann ein Modell berechnet werden, welches wiederum zur Ausgabe der jeweiligen kinematischen Daten dient. Die Berechnung eines derartigen Modells kann beispielsweise auf einer Steuerplatine durchgeführt werden, die bevorzugt auch die Aktoreinrichtungen oder die Aktoreinrichtung regelt.

Es ergibt sich so bevorzugt eine Art Blackbox, wie sie in Figur 2 gezeigt ist. Dabei können die genutzten Steuerungsdaten je nach Ansteuerung der Aktoreinrichtungen um die Geschwindigkeit erweitert werden. Dabei können beispielsweise Eingangsdaten E1 bis E5 eingegeben werden. So kann beispielsweise der Eingangswert E1 eine angehängte Masse sein, der Eingangswert E2 Schwerpunktkoordinaten, der Eingabewert E3 eine TCP (Tool Center Point)-Beschleunigung, der Eingabewert E4 eine TCP-Position und der Eingabewert E5 eine Auslöseschwelle. Auf Basis dieses Modells kann berechnet werden, ob ein Nothalt durchgeführt werden soll (Ausgabewert A). Bevorzugt werden jedoch nur Vorgabewerte für die Ansteuerung der Aktoreinrichtungen berechnet, d. h. insbesondere Rückhaltekräfte bzw. -vektoren

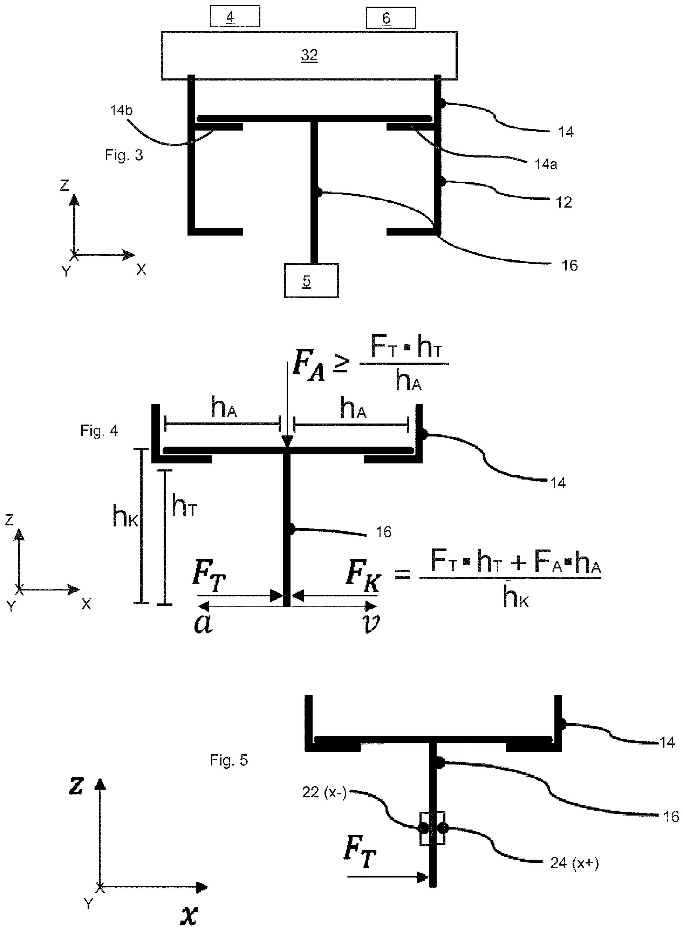

Figur 3 zeigt einen sehr grundlegenden und schematischen Aufbau eines erfindungsgemäßen Systems. Der mechanische Teil des Systems ist dabei zwischen einem Roboterflansch 32 und einer Peripherie 5 wie etwa einer Greifeinrichtung angeordnet. Dieser mechanische Teil, der beispielsweise ein Gehäuse 12 aufweist, erlaubt dabei ein Rückweichen in verschiedenen Freiheitsgraden. Das Bezugszeichen 4 kennzeichnet grob schematisch eine Erfassungseinrichtung zur Erfassung der Eingangsdaten E1 - E5. Dabei können Sensoreinrichtungen (nicht gezeigt) vorgesehen sein oder auch eine Erfassung aus der Programmierung der Steuerung vorgenommen werden.

Das Bezugszeichen 6 kennzeichnet, ebenfalls schematisch eine Berechnungseinrichtung, welche wenigstens eine Auslöseschwelle berechnet, ab dem eine Ausweich- oder Rückwärtsbewegung im Falle einer Kollision einzuleiten ist. Auf Basis dieser berechneten Auslöseschwelle kann eine (nicht in Fig. 3 gezeigte) Aktoreinrichtung eingestellt werden und insbesondere auf eine bestimmte Gegenkraft eingestellt werden, die im Kollisionsfall meist zumindest teilweise überwunden wird.

Sinnvoll sind hier die rotativen Freiheitsgrade um x-, y- und z-Achse sowie auch eine translatorische z-Achse.

Mit der Einführung jedes weiteren Freiheitsgrades wird die Mechanik komplexer, eine Reduktion führt jedoch zu einem Zwangsführen bei einer Rückweichbewegung.

Falls man es zum zentralen Drehpunkt der Konstruktion durch ein Gehäuse 12 erreicht, wobei dieses vorzugsweise eine Schutzeinrichtung (wie eine Sensorhaut) aufweist, einen Mindesthebel in der z-Richtung zu schaffen, so lösen auch translatorische Kollisionen (z. B. in der x- und y-Richtung) die rotativen Achsen (x und y) aus.

Hier schwenkt der Hebel 16 mit der daran angeordneten z. B. Greifeinrichtung 5 und so können auch Bewegungen in x und y ausgelöst werden. Die nachfolgenden Figuren zeigen jeweils ein stark vereinfachtes 2D-Modell eines bisher gängigen Konzeptes, um die Erfindung zu veranschaulichen. Grundsätzlich ist jedoch jede Auswahl und Anzahl an Freiheitsgraden möglich.

Die Bezugszeichen 14a und 14b kennzeichnen Auflageelemente, und Bezugszeichen 16 wie erwähnt einen Hebel. Bei einer Bewegung des Hebels kann es zu einem Anheben, beispielsweise der linken und der rechten Seite der Auflageplatte 15 kommen. Entsprechende Aktoren sind in Figur 3 nicht dargestellt. Diese verhindern bis zu einem bestimmten Grenzwert, d. h. der Auslöseschwelle ein Schwenken des Hebels 16 gegenüber dem Gehäuse. Bei darüber hinausgehenden Kräften (insbesondere im Falle einer Kollision) wird ein derartiges Schwenken ermöglicht und damit auch ein Zurückweichen bzw. ein Notstopp der Handhabungseinrichtung 5.

Ein Rückweichen der Mechanik wird von den (nicht gezeigten) Aktoreinrichtungen bis zu einer bestimmten Auslöseschwelle verhindert. Diese Auslöseschwelle wird ständig so geregelt, dass ein Rückweichen nur aufgrund der Trägheits- oder Erdanziehungskraft (wie im Modell berechnet) nicht stattfindet. Um Regelabweichungen und Latenzen auszugleichen, ist wie oben erwähnt ein bestimmter Offset vorteilhaft. Die Mechanik ist nun so konzipiert, dass für eine Kraft unabhängig von ihrer Richtung eine bestimmte Auslöseschwelle zur Auslösung des Kollisionsschutzes zur Anwendung kommt. Dies gilt auch unter Berücksichtigung des Offsets. Bevorzugt wirkt sich auf die Kollisionskraft im Wesentlichen oder ausschließlich der Offset aus.

Existierende Mechanikkonzepte blockieren meist mit einem einzigen Aktor alle Freiheitsgrade gleichzeitig. Dies hat den Vorteil, dass nur eine Aktoreinrichtung verwendet werden muss, welche die maximal auftretende Summe aus Trägheits- und Gewichtskraft aufnimmt. Allerdings führt dies bei adaptivem Betrieb dazu, dass bei einer Kollision entgegen der Beschleunigung gegen den aufgrund der Trägheits- und Gewichtskraft aktiven Aktor gearbeitet werden muss, um eine Auslösung zu erreichen.

Ein Fall, bei dem dies auftritt wäre eine bremsende Bewegung auf das Kollisionsobjekt oder den Werker zu. Im Umkehrschluss bedeutet dies, dass mit einer solchen Mechanik nur Beschleunigungen möglich sind, durch die der Aktor nicht zu stark angesteuert wird, sodass im Falle einer Kollision die Auslöseschwelle überschritten wird.

Figur 4 veranschaulicht auftretende Kräfte, wie sie aufgrund der entgegen der Beschleunigung a entstehenden Trägheitskraft F_{T} und um ein Auslösen der Mechanik aufgrund des Verfahrens zu vermeiden, entsprechend eingestellten Aktorkraft F_{A} auftreten. Tritt nun entgegen der Geschwindigkeit v eine Kollision auf, resultiert eine Kraft F_{K}, welche sich aus 2 Komponenten zusammensetzt. Einerseits der entgegengesetzten Trägheitskraft F_{T} zusätzlich aber auch der gesamten Aktorkraft F_{A} in Form eines Momenten-Gleichgewichts um den resultierenden gemeinsamen Drehpunkt D. In realistischen Anwendungsszenarien ist dieser Wert deutlich größer als der biomechanische Grenzwert. Zur Vereinfachung besitzen dieses und auch die nachfolgenden Modelle nur die Trägheitskraft, die in der korrekten Ausführung jedoch der Überlagerung von Trägheits- und Gewichtskraft entspricht.

Figur 5 zeigt beispielhaft eine Möglichkeit zur Aufteilung der Aktoreinrichtungen auf eine Weise, in der jede der Aktoreinrichtungen 22, 24 ausschließlich die negative respektive positive Richtung der Achse in x-Richtung blockiert. Die Aktoreinrichtungen 22, 24 sind bevorzugt in diesem Fall als eine Art Druckstück vorstellbar, die bei entsprechender Kraft zurückweichen.

Bei Konzepten dieser Art stört eine Aktoreinrichtung für eine Richtung der Achse die Bewegung in die entgegengesetzte Richtung nicht. An Fig. 5 kann man sich ebenfalls die Veränderung der Wirkrichtung der Aktoreinrichtung anschaulich machen, indem man sich nur eine der Aktoreinrichtungen vorstellt, die über eine Positionsverschiebung oder einen Hebel entweder auf der rechten oder linken Seite wirken kann.

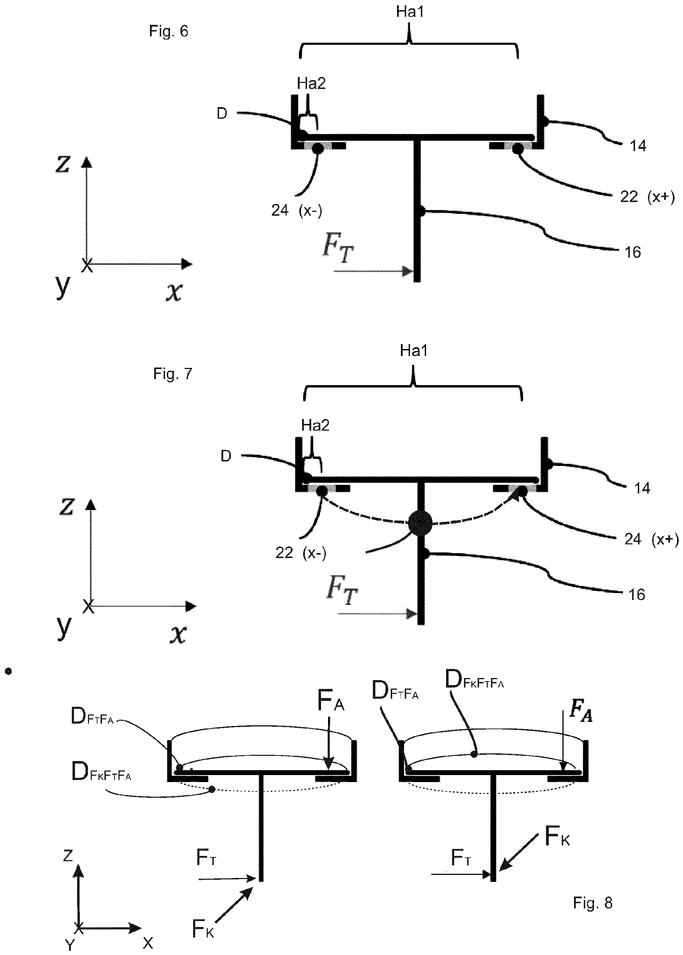

Die nachfolgenden Figuren 6 und 7 zeigen eine Ausgestaltung, bei der jede der Aktoreinrichtungen 22 und 24 mit einem unterschiedlichen Hebel gegen eine Auslösung der Mechanik in negativer respektiver positiver x-Richtung wirkt. Bei den in Figuren 6 und 7 gezeigten Ausgestaltungen können die Aktoreinrichtungen beispielsweise magnetische Halteeinrichtungen, wie Elektromagnete, sein.

Je nach genauer Anbringung hat eine Aktoreinrichtung, die eine Richtung eines Freiheitsgrads blockiert, keinen oder nur einen geringen Hebel zur Gegenrichtung.

Dies bedeutet, dass eine Bewegung entgegen der blockierenden Richtung der Aktoreinrichtung nicht oder nur gering behindert wird.

Die ebenfalls oben genannte Möglichkeit der Positionsänderung lässt sich mit Figur 7 beschreiben. Hierbei verschiebt sich der Magnet in einer dreidimensionalen Richtung unter der Auflage bei eingezeichnetem Kraftfall von links nach rechts (beispielsweise durch eine Drehung), womit sich der Hebel zum Drehpunkt erheblich verändert.

Die Bezugszeichen Ha1 und Ha2 bzw. Ha+ und Ha- in Fig. 7 kennzeichnen den Hebelarm in der Position 1 und den Hebelarm an der Position 2. Das Bezugszeichen 14 kennzeichnet wiederum eine Lagerung bzw. Auflage und das Bezugszeichen 16 den Hebel bzw. beweglichen Teil. Die Drehpunkte sind jeweils mit den Bezugszeichen D gekennzeichnet.

Das bislang vorgestellte Konzept zur Trennung jeder Achse in positive und negative Richtung bezüglich der Aktoreinrichtungen fand in der Betrachtung in Modellen mit nur zwei Freiheitsgraden statt.

Auch wenn die Umsetzung eines solchen Kollisionsschutzsystems denkbar ist, ist die Umsetzung mit mehreren Freiheitsgraden zur Rückweichung aufgrund der Applikation beispielsweise an Industrierobotern mit Bewegungen in allen 6 Freiheitsgraden deutlich wahrscheinlicher. Dabei tritt ein weiteres Problem der bisher üblichen Kinematiken auf. Dort blockiert der Aktor nicht nur die Rückweichung gleichzeitig in positiver und negativer Richtung einer Achse, sondern auch mehrerer Achsen. Auch dies kann dazu führen, dass die Kollision gegen einen aktiven Aktor arbeiten muss, um eine Auslösung zu erreichen.

Die Erfindung schlägt hierfür wieder zwei Lösungsansätze vor:
Zum einen kann jede Achse eigene Aktoreinrichtungen aufweisen, um eine Rückweichung zu blockieren.

Andererseits kann die Mechanik so ausgestaltet sein, dass zwei oder mehr Kräfte, die auf jeweils eine Achse wirken unabhängig ihrer Richtung auf dieselbe Weise gegen eine gemeinsame Aktoreinrichtung bzw. gemeinsame Aktoreinrichtungen arbeiten.

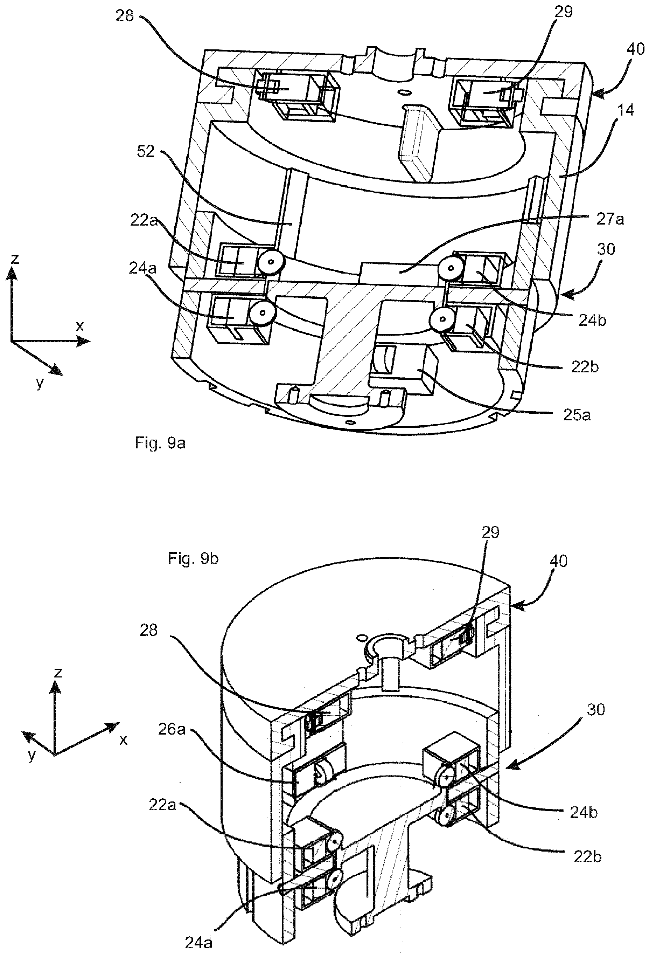

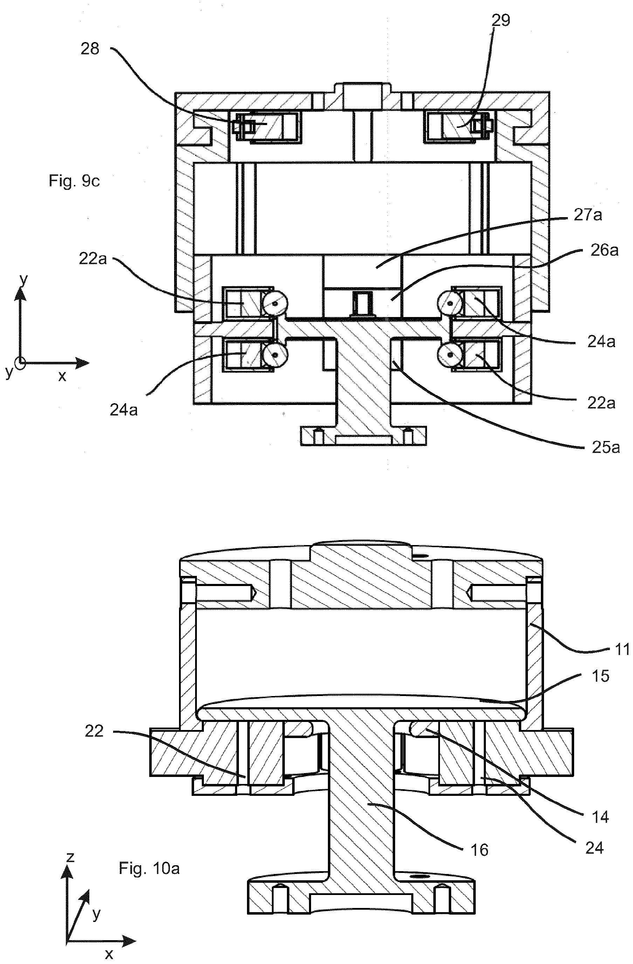

Die Figur 8 verdeutlicht dies anhand eines Beispiels. Bei der in Fig. 8 dargestellten Situation ist eine umlaufend angeordnete Aktoreinrichtung vorgesehen und bei der in Fig. 9 gezeigten Situation eine zentrisch wirkende Aktoreinrichtungen. Die Aktoreinrichtungen können mit ihren jeweiligen Kräften F_{A} jeweils sowohl den Kräften F_{K} als auch F_{T} entgegenwirken.

Kategorisiert werden können die durch die Erfindung vorgeschlagenen Varianten als serielle, parallele oder gemischte Kinematiken. Repräsentiert wird dies immer durch die Art der Achsaufteilung gemäß den beiden Möglichkeiten der vorangegangenen Beschreibungen.

Es folgen Beispiele für Umsetzungen der verschiedenen Typen:
In den Fig. 9a-c ist eine serielle Kinematik dargestellt. Das System deckt dabei die Achsen um x, y, z und in z ab.

Als Torsionsaufnahme um z dient ein Drehgelenk 40, dem die anderen Gelenke nachgeschalten sind. Die Bezugszeichen 28, 29 kennzeichnen die Aktoreinrichtungen der beiden Achsrichtungen dieser Torsionsaufnahme.

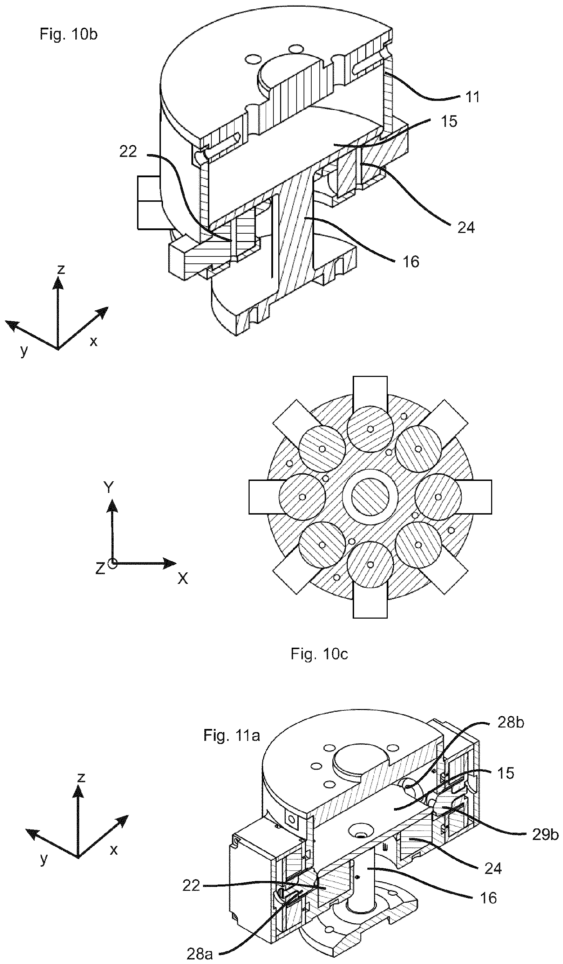

Eine kardanische Aufhängung 30 ermöglicht das Rückweichen um die Achsen x und y. Trotz der seriellen Eigenschaften ist dieses Lager sehr kompakt und bietet bauformbedingt gute Möglichkeiten zur Unterbringung von Aktoreinrichtungen. Die Aktoreinrichtungen 22a/b und 24a/b wirken für die beiden Rotationsrichtungen um die Y-Achse , und die Aktoreinrichtungen 25a und 26a wirken für die beiden Rotationsrichtungen um die X-Achse, wobei zwei weitere Aktoreinrichtungen mit Wirkrichtung um die X-Achse aufgrund der in Fig. 10a gezeigten Schnittansicht nicht dargestellt sind.

Als andere beispielhafte Lösungsmöglichkeiten zur Umsetzung der x- und y-Achsen seien noch, weniger raumeffizient, zwei getrennte Drehgelenke genannt. Abschließend besitzt die Konstruktion ein Linearlager 52 für die translatorische z-Achse, ebenfalls mit Aktoreinrichtungen 27a für die Einfederung. Eine oder mehrere andere symmetrisch angebrachte Aktoreinrichtungen sind aufgrund der Schnittansicht nicht dargestellt.

Mit dieser Konstruktion sind alle Achsen mechanisch voneinander unabhängig. Blockiert man nun jede Achse getrennt in positiver und negativer Richtung mit einer Aktoreinrichtung, erhält man eine rein serielle Kinematik, die es so ermöglicht das System auf einen Kraftvektor in Betrag und Richtung einzustellen, ohne die Auslösung bei einer Kollision über die Auslöseschwelle hinaus zu verhindern.

Bei der seriellen Kinematik kann es dazu kommen, dass ein Auslösen nur in einem Freiheitsgrad der Mechanik stattfindet, obwohl der Kollisionskraftvektor auch noch in anderen Richtungen Anteile besitzt, diese jedoch unter der Auslöseschwelle liegen. Dies führt bei der Rückweichbewegung zu einer Zwangsführung in der ausgelösten Richtung.

Um dies zu umgehen schlägt die Erfindung bei einer seriellen oder gemischten Kinematik vor, das Auslösen der Mechanik in allen Freiheitsgraden so zu überwachen, dass alle Aktoreinrichtungen bei der Auslösung abgeschaltet werden. Bei Elektromagneten könnte beispielsweise ein Induktiver Sensor als Öffner arbeiten und alle Elektromagnete stromlos schalten.

Die Fig. 10a-c zeigen ein Beispiel für eine parallele Kinematik, wobei Fig. 10c eine Schnittdarstellung zeigt.

Das System deckt dabei die Achsen um x und y sowie in z Richtung ab. Alle Achsen werden durch eine Konstruktion abgedeckt, bei der eine Scheibe 15 in einem Zylinder 11 mit umlaufender Auflage 14 liegt. Die Geometrie des Scheibenrandes ist dabei so ausgeformt, dass die Scheibe 15 auf der Auflage umlaufend verkippen kann. Durch eine Ausnehmung in der Auflage 14 ragt ein Schaft 16 , welcher die Scheibe 15 mit dem Werkzeugflansch verbindet.

Montiert man diese Konstruktion nun zwischen Roboterflansch und Endeffektoren ermöglicht sie die Bewegungen um x und y, sowie in positiver z-Richtung.

Zur Blockierung der Kinematik dienen in der Auflagefläche umlaufend angebrachte haltende Aktoreinrichtungen 22, 24 (wie etwa Elektromagnete). Bei dieser Konstruktion erhält man nun sowohl mechanisch als auch seitens der Aktoreinrichtungen einen rein parallelen Aufbau.

Rein parallele Kinematiken haben den Vorteil, dass ein Überschreiten der Kraftschwelle auch die anderen durch die Mechanik möglichen Freiheitsgrade frei gibt. Damit liegt eine Zwangsführung nur durch die mechanische Ausgestaltung, nicht aber die Ansteuerung vor.

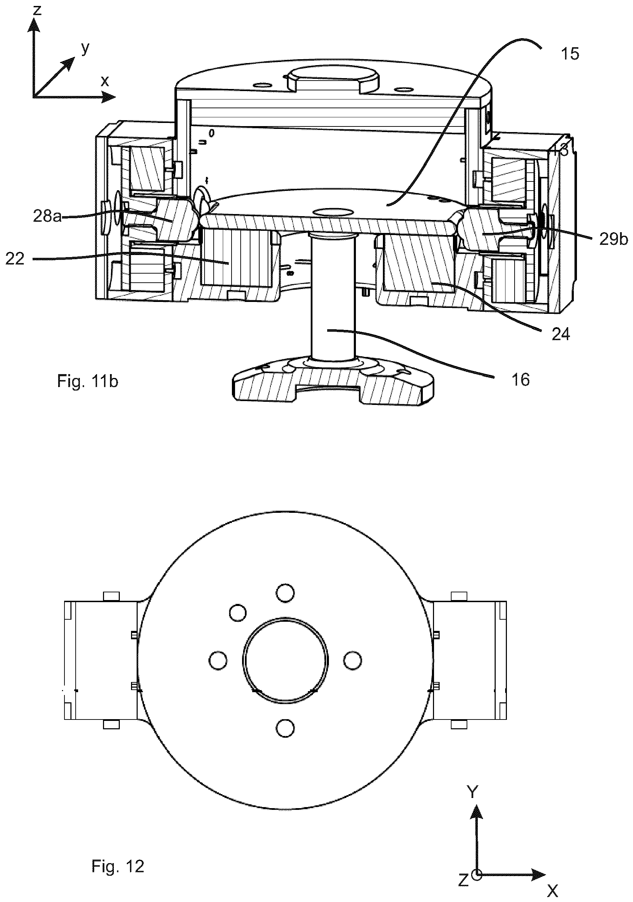

Die Fig. 11a,b und 13 zeigen ein Beispiel für eine gemischte Kinematik in einer Seitenansicht und einer Ansicht von oben.

Die Grundkinematik folgt der unter dem vorangegangenen Punkt beschriebenen Parallelkinematik. Das heißt um x und y sowie in z arbeitet eine parallele Kinematik. Nun wird seriell eine Torsionsachse um z in das Konzept eingefügt. Dies geschieht durch die Anbringung von Nocken auf der Scheibe 15, welche seitlich von Aktoreinrichtungen 28a/b und 29a/b blockiert werden.

Die Aktoren sind dabei so geformt, dass sie eine Rotation um z verhindern. Eine Rotation um x oder y bleibt jedoch weiter einzig durch die umlaufenden Aktoren behindert. Es gilt wie zu der seriellen Kinematik beschrieben, dass eine Umgehung der Zwangsführung durch eine Aktoreinrichtung durch entsprechende Sensorik/Schalter abgefangen werden kann.

Nochmals sei darauf hingewiesen, dass die vorangegangenen Konstruktionen nur beispielhaft die Erfindung beschreiben sollen. Es sind alle Gelenktypen seriell, parallel oder gemischt in der beschriebenen Weise kombinierbar. Dies gilt auch für die Anordnung und die Art der Aktoreinrichtungen.

## Patentansprüche

1. Handhabungsvorrichtung (1), insbesondere Roboter mit wenigstens einer in wenigstens einer Bewegungsrichtung (X) bewegbaren Handhabungseinrichtung (5) und mit einer Kollisionsschutzeinrichtung (10), welche dazu geeignet und bestimmt ist, die Kontaktkräfte bei Kollisionen der Handhabungseinrichtung (5) mit Objekten zu begrenzen, wobei die Kollisionsschutzeinrichtung (10) eine Kinematik aufweist, welche eine Relativbewegung der Handhabungseinrichtung (5) bezüglich eines Trägers der Handhabungseinrichtung mechanisch ermöglicht, wobei diese von wenigstens einer Aktoreinrichtung gesperrt werden kann und die Relativbewegung im Fall einer Kollision ermöglicht
**dadurch gekennzeichnet, dass**
die Handhabungsvorrichtung (1) eine Erfassungseinrichtung (4) aufweist, welche die auf die Handhabungseinrichtung und/oder die durch die Aktoreinrichtung entkoppelten Bestandteile der Kollisionsschutzeinrichtung wirkenden Kräfte ermittelt und die Kollisionsschutzeinrichtung (10) eine relative Bewegung der Handhabungseinrichtung zum Träger der Handhabungseinrichtung unter Berücksichtigung dieser Kräfte ohne Kollision durch die Aktoreinrichtung verhindert und bei einer Kollision auslöst oder ermöglicht.

2. Handhabungsvorrichtung (1) nach Anspruch 1,
**dadurch gekennzeichnet, dass**
die Handhabungsvorrichtung (1) eine Berechnungseinrichtung (6) aufweist, welche eine Gegenkraft ermittelt, die ein Zurückweichen der Handhabungseinrichtung trotz der infolge der Bewegung und/oder der Orientierung auftretenden Kräfte verhindert.

3. Handhabungsvorrichtung (1) nach wenigstens einem der vorangegangenen Ansprüche,
**dadurch gekennzeichnet, dass**
die Handhabungsvorrichtung (1) eine Steuerungseinrichtung aufweist, welche die Aktoreinrichtung unter Berücksichtigung der von der Erfassungseinrichtung ermittelten Kräfte steuert und/oder regelt.

4. Handhabungsvorrichtung (1) nach wenigstens einem der vorangegangenen Ansprüche,
**dadurch gekennzeichnet, dass**
eine Mechanik der Handhabungsvorrichtung (1) derart ausgebildet ist, dass eine Aktoreinrichtung das Rückweichen in einer Achs-Richtung blockiert und mit einer reduzierten Kraft oder ohne Kraft gleichzeitig die entgegengesetzte Richtung blockiert

5. Handhabungsvorrichtung (1) nach wenigstens einem der vorangegangenen Ansprüche,
**dadurch gekennzeichnet, dass**
jedem Freiheitsgrad der Relativbewegung der Handhabungseinrichtung (5) zum Träger der Handhabungseinrichtung wenigstens eine Aktoreinrichtung zugeordnet ist.

6. Handhabungsvorrichtung (1) nach Anspruch 1,
**dadurch gekennzeichnet, dass**
die Handhabungsvorrichtung (1) eine Erfassungseinrichtung zum Erfassen von kinematischen Parametern der Handhabungseinrichtung (5) aufweist.

7. Handhabungsvorrichtung (1) nach dem vorangegangenen Anspruch,
**dadurch gekennzeichnet, dass**
wenigstens eine Sensoreinrichtung vorgesehen ist, die zur Erfassung einer Beschleunigung sowie einer Position und/oder Orientierung der Handhabungseinrichtung geeignet und bestimmt ist.

8. Handhabungsvorrichtung (1) nach wenigstens einem der vorangegangenen Ansprüche, **dadurch gekennzeichnet, dass**
wenigstens Bestandteile der Kollisionsschutzeinrichtung zwischen der Handhabungseinrichtung (5) und einem Träger der Handhabungseinrichtung angeordnet sind.

9. Handhabungsvorrichtung (1) nach wenigstens einem der vorangegangenen Ansprüche, **dadurch gekennzeichnet, dass**
die Kollisionsschutzeinrichtung eine serielle, parallele oder gemischte Kinematik aufweist.

10. Handhabungsvorrichtung (1) nach wenigstens einem der vorangegangenen Ansprüche,
**dadurch gekennzeichnet, dass**
die Kollisionsschutzeinrichtung einen Mindesthebel zwischen dem Drehpunkt der Kinematik und einem Kollisionskraftangriffspunkt sicherstellt wobei dies Insbesondere durch Verwendung eines durch Sensorik vor Kontakt geschützten Gehäuses erfolgt.

11. Handhabungsvorrichtung (1) nach wenigstens einem der vorangegangenen Ansprüche,
**dadurch gekennzeichnet, dass**
aus der Bewegung und/oder der Orientierung der Handhabungseinrichtung resultierende Kräfte die Kinematik der Kollisionsschutzeinrichtung nicht an der Auslösung oder Ermöglichung einer Bewegung der Handhabungseinrichtung behindern.

12. Handhabungsvorrichtung (1) nach wenigstens einem der vorangegangenen Ansprüche,
**dadurch gekennzeichnet, dass**
die Mechanik der Kollisionsschutzeinrichtung mindestens teilweise seriell ausgeführt ist und bevorzugt eine Überwachungseinrichtung für die Auslösung mindestens einer Achse besitzt und bei Auslösung die Aktoren anderer Achsen, zumindest der der Kollision weiter entgegenwirkenden, abschaltet und so auch ein Rückweichen in diesen Achsen auch unterhalb der Auslöseschwelle ermöglicht.

13. Verfahren zum Betreiben einer Handhabungsvorrichtung (1), insbesondere eines Roboters mit wenigstens einer in wenigstens einer Bewegungsrichtung (X) bewegbaren Handhabungseinrichtung (5) wobei eine Kollisionsschutzeinrichtung (10) vorgesehen ist, welche die Kontaktkräfte bei Kollisionen der Handhabungseinrichtung (5) mit Objekten begrenzt, wobei die Kollisionsschutzeinrichtung (10) eine Kinematik aufweist, welche eine Relativbewegung der Handhabungseinrichtung (5) zu einem Träger der Handhabungseinrichtung (5) ermöglicht, wobei diese von wenigstens einer Aktoreinrichtung gesperrt werden kann und die Relativbewegung im Falle einer Kollision ausgelöst oder ermöglicht wird,
**dadurch gekennzeichnet, dass**
eine Erfassungseinrichtung (4) der Handhabungsvorrichtung die auf die Handhabungseinrichtung (5) und durch die Aktoreinrichtung (2) entkoppelten Bestandteile der Kollisionsschutzeinrichtung (10) infolge der Bewegung und/oder der Orientierung der Handhabungseinrichtung und der Kollisionsschutzeinrichtung wirkenden Kräfte ermittelt und die Kollisionsschutzeinrichtung (10) eine relative Bewegung der Handhabungseinrichtung zum Träger der Handhabungseinrichtung unter Berücksichtigung dieser Kräfte auslöst oder ermöglicht.
